# EUROPÄISCHE PATENTSCHRIFT

(11) **EP 0 797 725 B1**
(45) Veröffentlichungstag und Bekanntmachung des Hinweises auf die Patenterteilung: **15.04.1998**
(21) Anmeldenummer: 95939217.6
(22) Anmeldetag: 01.12.1995
(51) Int. Cl.: F01D 25/16, F01D 5/08

(54) **TURBINE MIT EINER MAGNETISCH GELAGERTEN WELLE**
TURBINE WITH SHAFT MOUNTED ON MAGNETIC BEARINGS
TURBINE A ARBRE MONTE SUR PALIERS MAGNETIQUES

(30) Priorität: 14.12.1994 DE 4444587
(43) Veröffentlichungstag der Anmeldung: 01.10.1997
(73) Patentinhaber: SIEMENS AKTIENGESELLSCHAFT, 80333 München (DE)
(72) Erfinder: RIES, Günter, D-91056 Erlangen (DE); THIELE, Rudolf, D-91058 Erlangen (DE)
(86) Internationale Anmeldenummer: DE9501709
(87) Internationale Veröffentlichungsnummer: WO9618805

(56) Entgegenhaltungen:
- DE-A- 4 436 831
- DE-B- 1 110 954
- JP-A- 4 164 171
- US-A- 5 196 748
- US-A- 5 256 638

## Beschreibung

Die Erfindung bezieht sich auf eine Turbine mit einer magnetisch gelagerten Welle, deren jedes Lager einen ersten mit der Welle verbundenen Lagerteil und einen zweiten ortsfesten Lagerteil umfaßt.

Turbinen, insbesondere Gas- oder Dampfturbinen, werden in vielen Bereichen zum Antrieb von Generatoren und von Arbeitsmaschinen eingesetzt. Dabei wird der Energieinhalt eines Brennstoffs zur Erzeugung einer Rotationsbewegung einer Turbinenwelle genutzt. Die Turbinenwelle ist üblicherweise mit einem Generator zur Stromerzeugung oder mit einer Arbeitsmaschine gekoppelt. Eine aufwendige Lagerung der möglicherweise sehr schnell rotierenden Wellen ist notwendig, um die in den Lagern der Welle unweigerlich auftretenden und den Wirkungsgrad der Turbine herabsetzenden Verluste gering zu halten.

Üblicherweise erfolgt die Lagerung der Wellen von Dampf- oder Gasturbinen mittels ölgeschmierter Gleit- oder Kugellager. Die Schmierung und Kühlung der Lager übernehmen dabei Mineralöle oder schwer brennbare Flüssigkeiten, die mittels Pumpen über Ölkühler und Ölbehälter mit Beruhigungsstrecken den Lagern zugeführt werden. Auch bei aufwendiger Schmierung dieser Art sind jedoch die dabei entstehenden Verluste durch Reibung, Pumpenantrieb und Wärmeabfuhr beträchtlich. Beispielsweise liegen bei einer Dampfturbine mit einer Leistung von z.B. 3,5 MW die Verluste dieser Art bei ca. 1,5 % der Gesamtleistung, was neben anderen Faktoren den erreichbaren Gesamtwirkungsgrad einer Kraftwerksanlage limitiert. Darüber hinaus besteht durch den Einsatz von Öl für die Schmierung der Lager und das somit mögliche Platzen von Ölleitungen nennenswerte Brandgefahr.

Magnetische Lager erlauben dagegen eine berührungs- und verschleißfreie Lagerung von bewegten Teilen sowie den Verzicht auf brennbare Schmiermaterialien, wie z.B. Öl. Dabei läßt sich ein Rotorkörper hermetisch, z.B. vakuumdicht, von dem ihn umgebenden Außenraum trennen. Die Verwendung magnetischer Lager bei der Lagerung von Turbinenwellen zur Erhöhung des Gesamtwirkungsgrades einer Kraftwerksanlage bei gleichzeitiger Reduktion einer möglichen Brandgefahr ist z.B. aus der deutschen Patentschrift DE-PS 42 27 280 C1 bekannt.

Die Konzeption herkömmlicher oder konventioneller Magnet lager basiert auf magnetischen Kräften zwischen stationären Elektromagneten eines Stators und mit einer Welle mitrotierenden ferromagnetischen Elementen eines Rotors. Bei einem Magnetlager dieses Typs sind die Magnetkräfte immer anziehend. Als Folge davon kann prinzipiell keine intrinsisch stabile Lagerung in allen drei Raumrichtungen erzielt werden (vgl. "Earnshaw'sches Theorem" in "Transactions of the Cambridge Philosophical Society", Vol. 7, 1842, S. 97) . Daher benötigen derartige Magnetlager eine aktive Lageregelung, die über Lagesensoren und einen Regelkreis die Ströme der Elektromagnete steuert und Auslenkungen des Rotors aus einer Sollage entgegenwirkt. Eine derartige, mehrkanalig auszuführende Regelung benötigt eine aufwendige Leistungselektronik. Gegen einen plötzlichen Ausfall des Regelkreises muß zur Gewährleistung der Betriebssicherheit der Anlage zusätzlich ein mechanisches Fanglager vorgesehen werden. Aufgrund dieser Notwendigkeiten, einen Regelmechanismus sowie ein Fanglager vorzusehen, erhöht sich der Aufwand - sowohl im Hinblick auf Kosten als auch im Hinblick auf Wartung und Instandhaltung - beim Einsatz einer magnetischen Lagerung für Turbinenwellen beträchtlich, so daß die damit verbundenen Vorteile im Vergleich zur konventionellen Lagerung in Gleitlagern mit Ölschmierung zum großen Teil relativiert werden.

Der Erfindung liegt somit die Aufgabe zugrunde, eine Turbine mit einer magnetisch gelagerten Welle derart anzugeben, daß die Vorteile des Prinzips der magnetischen Lagerung gegenüber dem Prinzip der Gleitlagerung in vollem Umfang genutzt werden können, wobei gleichzeitig die oben genannten Nachteile einer konventionellen magnetischen Lagerung vermieden sein sollen. Dies soll mit möglichst geringen Kosten erreicht werden.

Diese Aufgabe wird für eine Turbine mit einer magnetisch gelagerten Welle der oben genannten Art dadurch gelöst, daß am mit der Turbinenwelle verbundenen ersten Lagerteil ein permanentmagnetisches Element vorgesehen ist, daß der ortsfeste zweite Lagerteil supraleitendes Hochtemperatursupraleitermaterial umfaßt, und daß die Turbinenwelle mindestens einen Kühlmittelkanal für ein Kühlmedium aufweist.

Die Erfindung geht dabei von der Überlegung aus, daß in Magnetlagern, die eine Werkstoffpaarung von permanentmagnetischem und supraleitendem Material umfassen, eine inhärent stabile Lagerung erreicht werden kann. Dabei liegt die Theorie zugrunde, daß bei einer Paarung eines permanentmagnetischen Elements mit einem supraleitenden Element bei einer Lageänderung der beiden Elemente relativ zueinander als Folge von Magnetfeldänderungen im supraleitenden Element Abschirmströme induziert werden. Die daraus resultierenden Kräfte zwischen dem permanentmagnetischen und dem supraleitenden Element können sowohl abstoßend als auch anziehend sein. Sie sind aber grundsätzlich so gerichtet, daß sie der Lageänderung der beiden Elemente relativ zueinander entgegenwirken. Somit ist bei einer Lagerung der Welle der Turbine mit einem ein permanentmagnetisches Element umfassenden Lagerteil und mit einem ein supraleitendes Hochtemperatursupraleitermaterial umfassenden Lagerteil in vorteilhafter Weise erreicht, daß bei einer Auslenkung der Welle aus einer Sollage rückstellende magnetische Kräfte auftreten. Im Vergleich zu konventionellen Magnet lagern entfällt hier die aufwendige und störanfällige Regelung. Somit kann ein derartiges Lager im Hinblick auf Installation und Betrieb kostengünstig realisiert werden.

Um den supraleitenden Zustand des Hochtemperatursupraleitermaterials aufrechtzuerhalten, ist eine Kühlung des das Supraleitermaterial enthaltenden Lagerteils erforderlich. Aufgrund der supraleitenden Übergangstemperaturen von Hochtemperatursupraleitermaterialien, die deutlich über 85 K liegen können, ist die Aufrechterhaltung des supraleitenden Zustands durch eine Kühlung des Supraleitermaterials auf eine Temperatur von 77 K durch die Verwendung von flüssigem Stickstoff als Kühlmittel möglich. Um diese vergleichsweise aufwendige Kühlung zuverlässig zu gewährleisten, ist das supraleitende Hochtemperatursupraleitermaterial am ortsfesten zweiten Lagerteil angeordnet, während das permanentmagnetische Element am mit der Turbinenwelle verbundenen ersten Lagerteil vorgesehen ist. Dadurch ist die Kühlung des Supraleitermaterials durch flüssigen Stickstoff erleichtert.

Weiterhin weist die Turbinenwelle mindestens einen Kühlmittelkanal für ein Kühlmedium, insbesondere für Kühlwasser, auf. Dadurch ist eine Kühlung der Turbinenwelle ermöglicht, so daß ebenfalls eine Aufheizung des permanentmagnetischen Elements oder des Supraleitermaterials vermieden ist.

Zur Verringerung eines Wärmeübergangs von der im Betriebszustand der Turbine heißen Turbinenwelle, die Temperaturen von mehr als 500° C erreichen kann, auf das permanentmagnetische Element oder das Hochtemperatursupraleitermaterial weist in vorteilhafter Ausgestaltung der mit der Turbinenwelle verbundene erste Lagerteil ein zwischen der Turbinenwelle und dem permanentmagnetischen Element vorgesehenes Isolationselement auf. Somit wird vermieden, daß durch Wärmeabstrahlung der heißen Turbinenwelle entweder das permanentmagnetische Element auf Temperaturen oberhalb der Curie-Temperatur aufgewärmt wird, was zu einem Verlust der Magnetisierung führen würde, oder daß das Supraleitermaterial auf Temperaturen oberhalb der supraleitenden Übergangstemperatur aufgeheizt würde, was zu einem Zusammenbruch des supraleitenden Zustands führen würde.

Zur Vermeidung von Eisbildung aufgrund von Luftfeuchtigkeit in der Umgebung des gekühlten Supraleitermaterials steht zweckmäßigerweise ein Luftspalt zwischen dem mit der Turbinenwelle verbundenen ersten Lagerteil und dem ortsfesten zweiten Lagerteil der Turbinenwelle unter Unterdruck, insbesondere unter Vakuum.

In alternativer vorteilhafter Ausgestaltung ist am ortsfesten zweiten Lagerteil der Turbinenwelle ein Zuführungsrohr zur Einleitung von trockenem Gas, insbesondere Stickstoffgas, in den Spalt zwischen dem ersten und dem zweiten Lagerteil angeordnet.

Ferner umfaßt zweckmäßigerweise das permanentmagnetische Element mindestens eines der Lager eine Kombination von permanentmagnetischen und ferromagnetischen Bauteilen, die alternierend derart angeordnet sind, daß die Magnetisierungsrichtung der permanentmagnetischen Bauteile zwischen zwei benachbarten permanentmagnetischen Bauteilen umgekehrt ist. Ein Lager in derartiger Bauweise wirkt sowohl als Radial- als auch als Axiallager.

Die mit der Erfindung erzielten Vorteile bestehen insbesondere darin, daß durch die Verwendung magnetischer Lager, die jeweils ein permanentmagnetisches Element und supraleitendes Hochtemperatursupraleitermaterial umfassen, die Lagerung einer Turbinenwelle reibungsfrei und intrinsisch stabil möglich ist.

Ausführungsbeispiele der Erfindung werden anhand einer Zeichnung näher erläutert. Darin zeigen:
- Figur 1: eine Turbine mit einer magnetisch gelagerten Welle, und
- Figur 2: einen Ausschnitt aus Figur 1 in größerem Maßstab mit einem ersten mit der Welle verbundenen Lagerteil und einem zweiten ortsfesten Lagerteil eines Vorderlagers.

Einander entsprechende Teile sind in beiden Figuren mit den gleichen Bezugszeichen versehen.

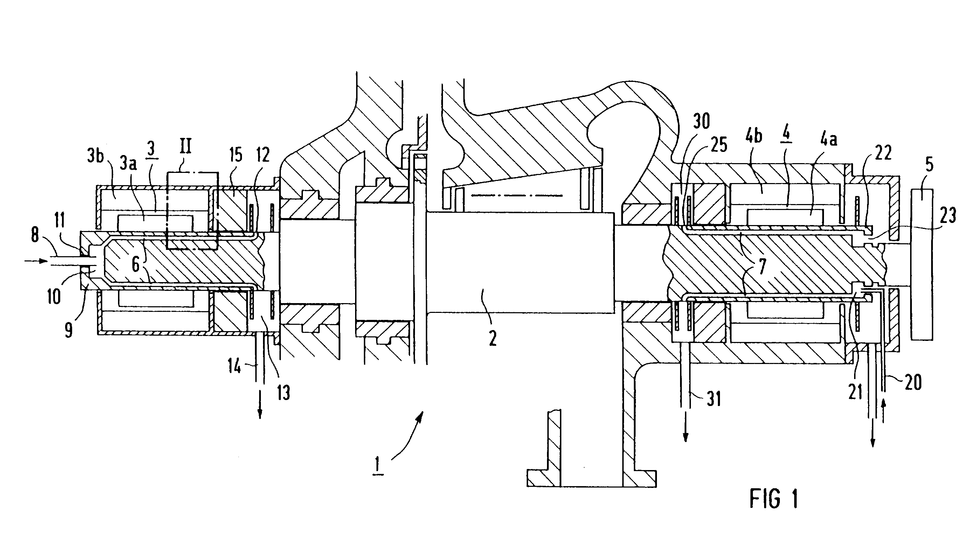

Die Turbine 1 gemäß Figur 1 weist eine Welle 2 auf, wobei die Turbine 1 beispielsweise eine Dampfturbine und somit eine Gegendruckturbine, eine Kondensationsturbine, eine Entnahmeturbine oder eine Mitteneinströmungsturbine oder auch eine Gasturbine sein kann. Die während des Betriebes der Turbine 1 schnell rotierende Welle 2 ist in zwei Lagern, dem Vorderlager 3 und dem Hinterlager 4, gelagert. Jedes der beiden Lager 3 bzw. 4 umfaßt einen ersten mit der Welle verbundenen Lagerteil 3a bzw. 4a und einen zweiten ortsfesten Lagerteil 3b bzw. 4b. An ihrem Ende 5 ist die Welle 2 mit einem (nicht dargestellten) Generator verbunden, den sie durch ihre Rotation antreibt.

Zur Kühlung der Welle 2 sind im Bereich des Vorderlagers 3 Kühlmittelkanäle 6 und im Bereich des Hinterlagers 4 Kühlmittelkanäle 7 vorgesehen. Die Kühlmittelkanäle 6, 7 werden von Wasser als Kühlmittel durchströmt. Dadurch wird die Temperatur an der Oberfläche der Turbinenwelle 2 während des Betriebs der Turbine 1 von etwa 500° C auf etwa 50 bis 100° C gesenkt. Zur Zuführung des Kühlwassers in die Kühlwasserkanäle 6 im Bereich des Vorderlagers 3 der Welle 2 ist eine Zuleitung 8 vorgesehen. Die Zuleitung 8 ist axial angeordnet und führt durch einen mit der Turbinenwelle 2 fest verbundenen Gehäuseteil 9 in eine Kühlwasserkammer 10. Ein Bereich 11 zwischen der - nicht rotierenden - Zuführung 8 und dem - mit der Welle 2 rotierenden - Gehäuseteil 9 ist mit einer (nicht gezeigten) Dichtung abgedichtet.

Beim Betrieb der Turbine 1 wird mittels der Zuführung 8 Kühlwasser in die Kühlwasserkammer 10 zugeführt. Durch die Fliehkraft aufgrund der Rotation der Welle 2 wird das Kühlwasser in die Kühlwasserkanäle 6 gepreßt und durchströmt diese. Das Kühlwasser verläßt die Kühlwasserkanäle 6 durch Ausströmöffnungen 12 und strömt in einen Sammelraum 13. Im unteren Bereich des Sammelraums 13 ist eine Kühlwasserableitung 14 angeordnet, durch die das Kühlwasser aus dem Turbinenbereich herausgeführt wird. Der Sammelraum 13 ist mittels einer Dichtung 15 vom Bereich des Lagers 3 mit den Lagerelementen 3a und 3b getrennt, so daß ein Eindringen von Kühlwasser in den Bereich des Lagers 3 vermieden ist.

Zur Zuführung von Kühlwasser in die Kühlwasserkanäle 7 im Bereich des Hinterlagers 4 der Turbinenwelle 2 ist eine - exzentrisch angeordnete - Kühlwasserzuführung 20 vorgesehen. Eine axiale Anordnung der Kühlwasserzuführung 20 ist in diesem Bereich nicht möglich, da im axialen Bereich der Welle 2 der Generator angeflanscht ist. Durch die Kühlwasserzuführung 20 zugeführtes Kühlwasser gelangt in eine Kühlwasserkammer 21. Zur Durchführung der Kühlwasserzuführung 20 durch das Gehäuse 22 der Kühlwasserkammer 21 ist ein ringförmiger Spalt 23 vorgesehen, so daß hier keine vollständige Dichtigkeit möglich ist. Durch die Fliehkraft aufgrund der Rotationsbewegung der Turbinenwelle 2 wird jedoch auch hier das mittels der Kühlwasserzuführung 20 in die Kühlwasserkammer 21 zugeführte Kühlwasser radial nach außen gepreßt. Somit gelangt es in die Kühlwasserkanäle 7. Durch Austrittsöffnungen 25 der Kühlwasserkanäle 7 strömt das Kühlwasser in einen Sammelraum 30, an dem im unteren Bereich ein Kühlwasserablauf 31 angeordnet ist.

Somit ist eine Durchströmung der Turbinenwelle 2 mit Kühlwasser in den Bereichen beider Lager 3 und 4 ermöglicht. Der Kühlwasserkreislauf für eines oder beide Lager kann offen oder geschlossen sein. Alternativ zum Wasser kann auch anderes Kühlmittel, beispielsweise Öl, verwendet werden.

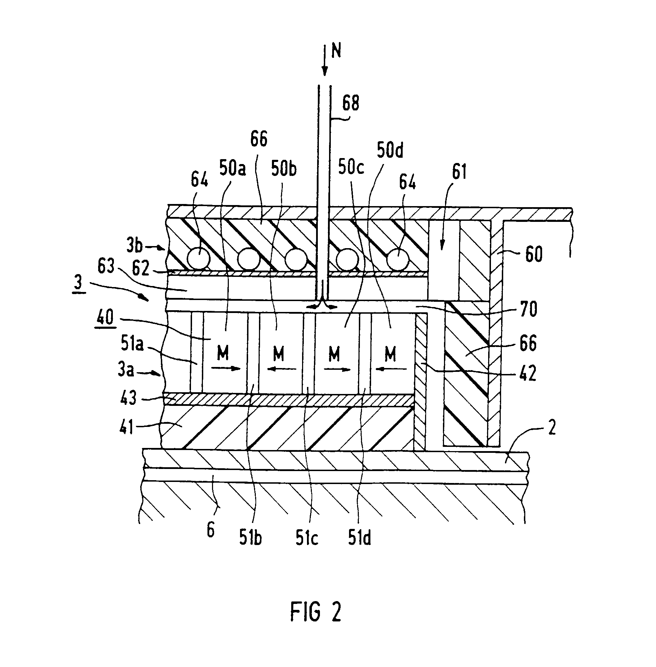

Der Aufbau der Lager 3 und 4 der Turbinenwelle 2 ist prinzipiell gleich und daher in Figur 2 am Beispiel des Vorderlagers 3 veranschaulicht. An der, den Kühlkanal 6 aufweisenden Turbinenwelle 2 ist der mit der Welle 2 verbundene erste Lagerteil 3a angeordnet. Dieser umfaßt ein permanentmagnetisches Element 40 und ein Isolationselement 41. Das Isolationselement 41 besteht aus schlecht wärmeleitendem Material, beispielsweise aus Polyurethan- oder Polystyrolschaum oder einem mineralischen Faser- oder Pulvermaterial. An der Welle 2 ist eine scheibenförmige Haltevorrichtung 42 befestigt. Die Haltevcrrichtung 42 trägt ein nichtmagnetisches Trägerrohr 43. Auf dem Trägerrohr 43 ist das permanentmagnetische Element 40 angeordnet. Das Isolationselement 41 ist zwischen der Turbinenwelle 2 und dem Trägerrohr 43 vorgesehen, um den Wärmeubertrag von der Turbinenwelle 2 auf das permanentmagnetische Element 40 zu minimieren. Das permanentmagnetische Element 40 umfaßt permanentmagnetische Bauteile 50a bis 50d und ferromagnetische Bauteile 51a bis 51c. Diese lamellenförmigen Bauteile 50a bis 50d und 51a bis 51c sind derart angeordnet, daß permanentmagnetische Bauteile und ferromagnetische Bauteile abwechselnd aufeinander folgen. Die permanentmagnetischen Bauteile 50a bis 50d, die vorzugsweise aus einer die Materialien Nd, B und Fe aufweisenden Legierung bestehen und eine Koerzitivfeldstärke von mindestens 0,8 x 10⁶ A/m aufweisen, weisen eine parallel zur Achse der Turbinenwelle 2 ausgerichtete, alternierend angeordnete Magnetisierung M auf, wie durch die Pfeile angedeutet. Das ferromagnetische Material der Bauteile 51a bis 51c dient zur Konzentration des Magnetflusses an der zylinderförmigen Außenfläche des Lagerteils 3a. Somit wird die Tragkraft des Lagers 3 erhöht. Durch die alternierende Polarisation der Magnetisierung M ist das Lager 3 sowohl in radialer als auch in axialer Richtung stabil.

Der ortsfeste zweite Lagerteil 3b ist in einem Gehäuse 60 angeordnet. Am Gehäuse 60 ist eine Haltevorrichtung 61 befestigt. Die Haltevorrichtung 61, die aus schlecht wärmeleitendem Material, insbesondere aus rostfreiem Stahl, besteht, trägt ein an einem Trägerrohr 62 angeordnetes Element aus supraleitendem Hochtemperatursupraleitermaterial 63. Als Hochtemperatursupraleitermaterial ist vorzugsweise YBa₂Cu₃O_{7-d} vorgesehen. Am Trägerrohr 62 sind Kühlrohre 64 vorgesehen. Alternativ kann das Trägerrohr 62 auch von einem Ringtank für flüssigen Stickstoff umgeben sein. Zur Verminderung von Wärmeeintrag in das Hochtemperatursupraleitermaterial sind am Trägerrohr 62 Isolatorelemente 66 aus schlecht wärmeleitendem Material, beispielsweise aus Polystyrolschaum, angeordnet. Die Kühlrohre 64 werden von flüssigem Stickstoff durchströmt, so daß das Hochtemperatursupraleitermaterial eine Temperatur von etwa 77 K aufweist. Somit befindet sich das Hochtemperatursupraleitermaterial im supraleitenden Zustand, so daß bei einer Lageveränderung des permanentmagnetischen Elements 40 relativ zum supraleitenden Element 63 im Supraleitermaterial 63 Abschirmströme angeworfen werden. Dadurch werden magnetische Kräfte hervorgerufen, die der Lageveränderung des permanentmagnetischen Elements 40 relativ zum Supraleitermaterial 63 entgegenwirken. Durch diese Kräfte stellt sich die vorherige Lage des permanentmagnetischen Elements 40 bezogen auf das Supraleitermaterial 63 selbsttätig wieder ein. Dadurch wird eine intrinsisch stabile Lagerung ermöglicht.

Der die Kühlrohre 64 durchströmende flüssige Stickstoff befindet sich in einem geschlossenen Kühlmittelkreislauf. Mittels eines am ortsfesten Lagerteil 3b angeordneten Zuführungsrohrs 68 wird trockener, gasförmiger Stickstoff (N) - wie durch die Pfeile angedeutet - in einem Lagerspalt 70 zwischen dem mit der Turbinenwelle 2 verbundenen ersten Lagerteil 3a und dem ortsfesten zweiten Lagerteil 3b eingeleitet, so daß durch den somit hergestellten Durchstrom trockenen Stickstoffs das Eindringen feuchter Luft in den Lagerspalt 70 vermieden ist. Alternativ kann der Lagerspalt 70 auch unter Unterdruck, vorzugsweise unter Vakuum, stehen. Somit ist vermieden, daß Feuchtigkeit enthaltende Raumluft in den Lagerspalt 70 eindringen und dort zu Vereisung aufgrund der Nähe des gekühlten Supraleitermaterials führen kann.

Zum Einbringen der Turbinenwelle 2 in eine Sollage ist vorteilhafterweise eine (nicht dargestellte) Hebevorrichtung vorgesehen, wobei beim Stillstand der Turbine 1 Hebeelemente die Turbinenwelle 2 in einer vorgegebenen Lage oberhalb einer Sollposition tragen. Zur Inbetriebnahme der magnetischen Lager 3 und 4 wird die Kühlung des Supraleitermaterials aktiviert, so daß sich der supraleitende Zustand einstellt. Mittels der Hebevorrichtung wird die Turbinenwelle 2 dann leicht abgesenkt. Somit werden rückstellende Kräfte zwischen den Lagerteilen 3a und 3b bzw. zwischen den Lagerteilen 4a und 4b induziert. Mittels dieser Kräfte wird die Turbinenwelle 2 in einer Sollage gehalten. Die Hebeelemente der Hebevorrichtung werden sodann von der Turbinenwelle 2 entfernt, so daß die Lagerung der Turbinenwelle 2 reibungsfrei ist.

Zur Erhöhung der Betriebssicherheit der Turbine 1 können in beiden Lagern 3 und 4 mechanische Fang-, d.h. Notlager, vorgesehen sein, durch die eine Rotationsbewegung der Turbinenwelle 2 auch ohne Kühlung der Lager 3 und 4 möglich ist. Die supraleitenden magnetischen Lager 3 und 4 können im Gegensatz zu geregelten Magnetlagern jedoch nicht plötzlich ausfallen. Aus diesem Grund ist ein mechanisches Fanglager nicht zwingend erforderlich.

## Patentansprüche

1. Turbine (1) mit einer in Lagern (3, 4) magnetisch gelagerten Turbinenwelle (2), wobei jedes Lager (3, 4) einen mit der Turbinenwelle (2) verbundenen ersten Lagerteil (3a, 4a) und einen ortsfesten zweiten Lagerteil (3b, 4b) umfaßt,
**dadurch gekennzeichnet**, daß am ersten Lagerteil (3a, 4a) ein permanentmagnetisches Element (40) vorgesehen ist,
daß der zweite Lagerteil (3b, 4b) supraleitendes Hochtemperatursupraleiter-Material umfaßt, und
daß die Turbinenwelle (2) mindestens einen Kühlmittelkanal (6, 7) für ein Kühlmedium aufweist.

2. Turbine (1) nach Anspruch 1,
**dadurch gekennzeichnet**, daß der erste Lagerteil (3a, 4a) ein Isolationselement (41) aufweist, das zwischen der Turbinenwelle (2) und dem permanentmagnetischen Element (40) vorgesehen ist.

3. Turbine (1) nach einem der Ansprüche 1 oder 2,
**dadurch gekennzeichnet**, daß ein Lagerspalt (70), der sich zwischen dem ersten Lagerteil (3a, 4a) und dem zweiten Lagerteil (3b, 4b) befindet, unter Unterdruck gegenüber der Umgebung steht.

4. Turbine (1) nach einem der Ansprüche 1 bis 3,
**gekennzeichnet durch** ein am zweiten Lagerteil (3b, 4b) angeordnetes Zuführungsrohr (68) zum Einleiten von Gas in einen Lagerspalt (70), der sich zwischen dem ersten Lagerteil (3a, 4a) und dem zweiten Lagerteil (3b, 4b) befindet.

5. Turbine (1) nach einem der Ansprüche 1 bis 4,
**dadurch gekennzeichnet**, daß mindestens eines der Lager (3, 4) der Turbinenwelle (2) ein Radiallager und ein Axiallager umfaßt.

6. Turbine (1) nach einem der Ansprüche 1 bis 5,
**dadurch gekennzeichnet**, daß das permanentmagnetische Element (40) mindestens eines der Lager (3, 4) eine Kombination von permanentmagnetischen und ferromagnetischen Bauteilen (50a, 50b, 50c, 50d, 51a, 51b, 51c) umfaßt, die alternierend derart angeordnet sind, daß die Magnetisierungsrichtung der permanentmagnetischen Bauteile (50a, 50b, 50c, 50d) zwischen zwei benachbarten permanentmagnetischen Bauteilen (50a, 50b, 50c, 50d) umgekehrt ist.

## Claims

1. Turbine (1) with a turbine shaft (2) magnetically mounted in bearings (3, 4), wherein each bearing (3, 4) comprises a first bearing part (3a, 4a) connected to the turbine shaft (2) and a fixed, second bearing part (3b, 4b), characterised in that a permanent-magnet element (40) is provided on the first bearing part (3a, 4a), that the second bearing part (3b, 4b) comprises superconductive high-temperature superconductor material, and that the turbine shaft (2) has at least one coolant channel (6, 7) for a cooling medium.

2. Turbine (1) according to claim 1, characterised in that the first bearing part (3a, 4a) has an insulating element (41) provided between the turbine shaft (2) and the permanent-magnet element (40).

3. Turbine (1) according to one of claims 1 and 2, characterised in that a bearing gap (70) between the first bearing part (3a, 4a) and the second bearing part (3b, 4b) is under negative pressure relative to the surroundings.

4. Turbine (1) according to one of claims 1 to 3, characterised by a feed tube (68) disposed at the second bearing part (3b, 4b) to introduce gas into a bearing gap (70) between the first bearing part (3a, 4a) and the second bearing part (3b, 4b).

5. Turbine (1) according to one of claims 1 to 4, characterised in that at least one of the bearings (3, 4) of the turbine shaft (2) comprises a radial bearing and an axial bearing.

6. Turbine (1) according to one of claims 1 to 5, characterised in that the permanent-magnet element (40) of at least one of the bearings (3, 4) comprises a combination of permanent-magnet and ferromagnetic components (50a, 50b, 50c, 50d, 51a, 51b, 51c) which are disposed alternately such that there is a reversal in the direction of magnetisation of the permanent-magnet components (50a, 50b, 50c, 50d) between two adjacent permanent-magnet components (50a, 50b, 50c, 50d).

## Revendications

1. Turbine (1) dont l'arbre (2) est monté dans des paliers (3, 4) magnétiques, chaque palier (3, 4) comprenant une première partie (3a, 4a) liée à l'arbre (2) de turbine et une deuxième partie (3b, 4b) fixe, caractérisée en ce qu'un élément (40) magnétique permanent est prévu sur la première partie (3a, 4a) de palier, que la deuxième partie (3b, 4b) de palier comprend un matériau supraconducteur à haute température et que l'arbre (2) de turbine comporte au moins un canal (6, 7) pour un réfrigérant.

2. Turbine (1) selon la revendication 1, caractérisée en ce que la première partie (3a, 4a) de palier présente un élément (41) isolant qui est prévu entre l'arbre (2) de turbine et l'élément (40) magnétique permanent.

3. Turbine (1) selon l'une des revendications 1 ou 2, caractérisée en ce qu'un jeu (70) de palier, qui se trouve entre la première partie (3a, 4a) de palier et la deuxième partie (3b, 4b) de palier, est soumis à une dépression par rapport à ce qui l'entoure.

4. Turbine (1) selon l'une des revendications 1 à 3, caractérisée par un tuyau (68) d'amenée disposé sur la deuxième partie (3b, 4b) de palier pour introduire du gaz dans un jeu (70) de palier qui se trouve entre la première partie (3a, 4a) de palier et la deuxième partie (3b, 4b) de palier.

5. Turbine (1) selon l'une des revendications 1 à 4, caractérisée en ce que au moins un des paliers (3, 4) de l'arbre (2) de turbine comprend un palier radial et un palier axial.

6. Turbine (1) selon l'une des revendications 1 à 5, caractérisée en ce que l'élément (40) magnétique permanent d'au moins un des paliers (3, 4) comprend une combinaison d'éléments (50a, 50b, 50c, 50d, 51a, 51b, 51c) magnétiques permanents et ferromagnétiques qui sont disposés en alternance de telle manière que le sens de magnétisation des éléments (50a, 50b, 50c, 50d) magnétiques permanents est inversé entre deux éléments (50a, 50b, 50c, 50d) magnétiques permanents.
